# Europäisches Patentamt

# European Patent Office

# Office européen des brevets

(19)

(11) Veröffentlichungsnummer: **0 128 543**
**A1**

(12) **EUROPÄISCHE PATENTANMELDUNG**

(21) Anmeldenummer: **84106530.3**

(22) Anmeldetag: **07.06.84**

(51) Int. Cl.³: **G 01 S 13/52,** G 01 S 13/54, G 01 S 13/22

(30) Priorität: **13.06.83 DE 3321263**

(43) Veröffentlichungstag der Anmeldung: **19.12.84**
**Patentblatt 84/51**

(84) Benannte Vertragsstaaten: **BE DE FR GB IT NL SE**

(71) Anmelder: **Siemens Aktiengesellschaft, Berlin und München Wittelsbacherplatz 2, D-8000 München 2 (DE)**

(72) Erfinder: **Siegel, Harald, Johann-Werner-Strasse 4, D-8035 Gauting (DE)**
Erfinder: **Hauptmann, Rudolf, Dipl.-Ing., Augustenfelder Strasse 23, D-8060 Dachau (DE)**

(54) **Puls-Doppler-Radargerät mit veränderbarer Pulsfolgefrequenz.**

(57) Um in Puls-Doppler-Radargeräten mit veränderbarer Pulsfolgefrequenz eine Verschlechterung der Festzeichenunterdrückung bei Überreichweitenempfang zu vermeiden, werden die Echosignale in einer aus mehreren Filtern bestehenden Integrationsschaltung einer durch eine vereinfachte vektorielle Addition der Echosignale modifizierten kohärenten Integration unterzogen. Die am Ausgang jedes Filters erhaltene Signalamplitude wird nacheinander einzeln mit dem Mittelwert der Signalamplituden aller Nachbarfilter verglichen. Wird der Mittelwert durch die Signalamplitude eines Einzelfilters überschritten, dann erfolgt eine Zielanzeige.

SIEMENS AKTIENGESELLSCHAFT
Berlin und München

Unser Zeichen
VPA 83 P 1404 E

0128543

Puls-Doppler-Radargerät mit veränderbarer Pulsfolgefrequenz

Die Erfindung bezieht sich auf ein Puls-Doppler-Radargerät mit veränderbarer Pulsfolgefrequenz und mit je einer Anordnung zur Unterdrückung von Festzeichen und zur Integration der Echosignale.

Radargeräte mit fester Pulsfolgefrequenz verarbeiten neben den Bewegt- und Festzielen aus der eindeutigen Reichweite des Radargerätes die durch die Pulsfolgefrequenz bestimmt ist, auch unerwünschte Zielechos aus Überreichweiten. Dabei können je nach Systemdaten des Radargerätes Echos aus mehreren Überreichweiten entdeckt werden.

Bei Puls-Doppler-Radargeräten mit Festzeichenunterdrükkung durch ein Dopplerfilter hat die periodische Umschaltung der Pulsfolgefrequenz zur Folge, daß die Unterdrükkung von Festzeichenechos aus den Überreichweiten verschlechtert ist. Während Festzielechos aus der eindeutigen Reichweite bei verschiedenen Pulsfolgefrequenzen unverändert in das gleiche Entfernungselement treffen, fallen die Festzeichenechos aus den Überreichweiten nach dem Umschaltzeitpunkt in andere Entfernungselemente, so daß sich in der Regel die Festzielamplitude in jedem Entfernungselement ändert. Damit ist das Kriterium (konstante Amplitude) für die Unterdrückung von Festzeichen im Dopplerfilter entfallen. Das sich in der Amplitude ändernde Festzeichensignal ist von einem Bewegtzielechosignal nicht mehr zu unterscheiden und wird vom Dopplerfilter nur noch teilweise unterdrückt.

Ha 1 Fra / 8.6.1983

6 Ausfertigungen
1.Ausfertigung

Aufgrund des Wechsels der Pulsfolgefrequenz von Puls zu Puls (Staggerung) fallen die Echos der einzelnen Hits von Zielen oder von Störern, die Zielechosignale vortäuschen, aus Überreichweiten in verschiedene Entfernungstore. Sie stellen somit im jeweiligen Entfernungstor Einzelimpulse dar, die nicht aufintegriert werden können. Die Wahrscheinlichkeit ihrer Entdeckung vermindert sich daher bei überlagertem Rauschen wunschgemäß erheblich. Erstreckt sich jedoch ein ausgedehntes Clutter-Gebiet über Entfernungen, die für das Radargerät mehrere Entfernungsreichweiten gleichzeitig darstellen, so wächst die Wahrscheinlichkeit, daß mehrere Zielechos aus mehreren Überreichweiten sich in dem selben Entfernungstor innerhalb der Integrationszeit häufen, erheblich. In diesem Fall führen Festzeichenechos, die aus Überreichweite stammen, zu einer Fehlanzeige.

Es ist bereits bekannt (DE-OS 31 10 279), die Pulsfolgefrequenz so zu staffeln, daß während der Zielüberstreichzeit mindestens zwei unterschiedliche Pulsfolgefrequenzen gesendet werden. Ziele aus Überreichweiten unterscheiden sich von denen der eindeutigen Reichweite dadurch, daß die Echosignale einer jeden Pulsfolgefrequenz in ein anderes Entfernungstor fallen. Festzeichenechos liefern dadurch entsprechend der Anzahl der verwendeten Pulsfolgefrequenzen weniger integrierbare Treffer und werden gegenüber Signalen aus der eindeutigen Reichweite des Radargerätes geschwächt. Da jede Umschaltung der Pulsfolgefrequenz im Bewegzeichenfilter zu Einschwingvorgängen führt, die Änderungen in der Amplitude von Festzielechos zur Folge haben und damit die Festzeichenunterdrückung stören, werden nach jedem Wechsel der Pulsfolgefrequenz die ersten Empfangsperioden ausgetastet. Diese Art der Staffelung der Pulsfolgefrequenz eignet sich, ohne daß ein merklicher Empfindlichkeitsverlust eintritt, insbesondere für Radargeräte, die eine große Trefferanzahl während der Zielüberstreichzeit aufweisen. Mit Rücksicht auf eine kostengünstige Lösung erfolgt die Integration der Echosignale üblicherweise nicht kohärent. Derartige Nachintegrationsschaltungen sind kostengünstig, erzielen aber keine optimale Wirkung.

Der Erfindung liegt die Aufgabe zugrunde, bei einem Puls-Doppler-Radargerät der eingangs genannten Art eine Verschlechterung der Festzeichenunterdrückung bei Überreichweitenempfang zu verhindern. Gemäß der Erfindung wird diese Aufgabe dadurch gelöst, daß die Echosignale einer durch vereinfachte vektorielle Addition der Doppler-Signalimpulse modifizierten kohärenten Integration in einer Integrationsschaltung mit mehreren Filtern unterzogen werden und daß die am Ausgang jedes Filters erhaltene Signalamplitude einzeln mit dem Mittelwert der Videosignale aller Nachbarfilter verglichen und bei Überschreiten des Mittelwertes zu einer Zielanzeige genutzt wird.

Eine derartige Lösung ermöglicht es, mit einer geringen Anzahl von Filtern die Überreichweitenechos spektral von den Bewegtzielen der eindeutigen Reichweite zu unterscheiden. Auch in starkem Überreichweitenclutter ist durch die modifizierte kohärente Integration eine optimale Entdekkung von Bewegtzielen aus der eindeutigen Reichweite gewährleistet, da die Echosignale eines Entfernungstores über mehrere Empfangsperioden vektoriell addiert werden. Infolge der vorgegebenen besonderen Staffelung der Pulsfolgefrequenz wird jedoch die mittlere Leistung von Überreichweitenechos auf mehrere Entfernungstore verteilt. Die modifizierte kohärente Integration ermöglicht es, mit einer geringen Anzahl von Filtern den gesamten interessierenden Dopplerfrequenzbereich abzudecken und die unterschiedlichen Pulsperioden statistisch aneinanderzureihen.

Gemäß einer vorteilhaften Weiterbildung der Erfindung können die Vorteile der kohärenten Integration auch bei Auftreten von Einzelimpulsen gesichert werden, wenn der Integrationsschaltung eine Schaltung zur Einzelimpulsunterdrückung vorgeschaltet ist.

Die Erfindung und weitere Einzelheiten der Erfindung werden anhand der Fig. 1 bis 7 näher erläutert.

Es zeigen

Fig. 1 ein Blockschaltbild des Signalverarbeitungszweiges eines Pulsdopplerradargerätes mit einer vektoriellen Integration,

Fig. 2 die Ausführung einer Schaltung zur modifizierten kohärenten (vektoriellen) Integration der Echosignale,

Fig. 3 eine Schaltung zur Durchführung des Filtervergleiches,

Fig. 4 und 5 Beispiele für die Staffelung der Pulsfolgefrequenz,

Fig. 6 und 7 die Übertragungsfunktionen der Integrationsschaltung für zwei verschiedene Pulsfolgefrequenz-Staffelungen.

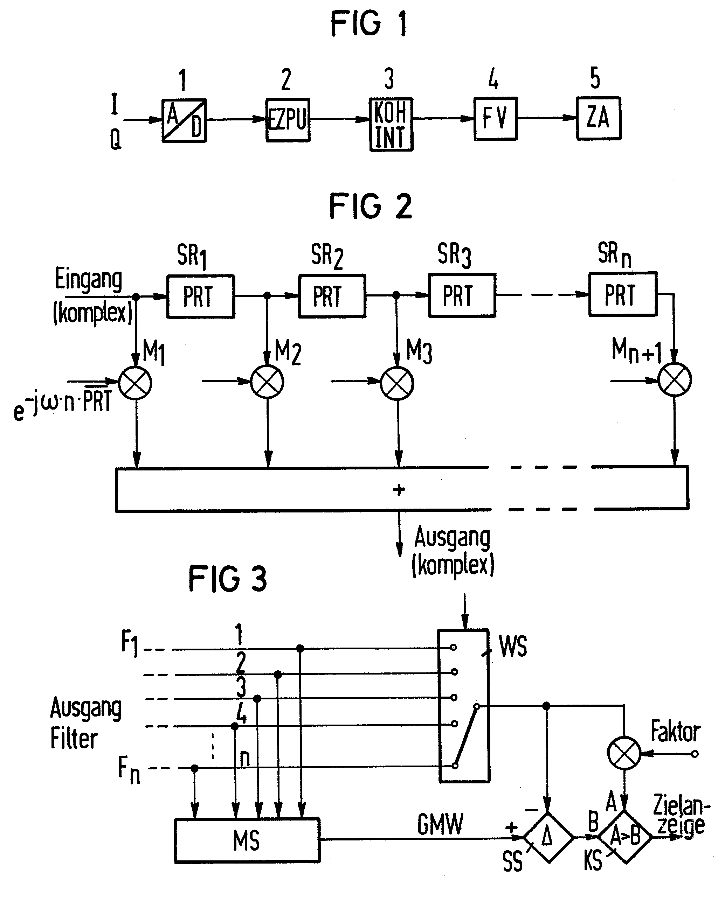

Dem digitalen Signalverarbeitungszweig nach Fig. 1 wird eingangsseitig von einem nicht dargestellten Phasendetektor die Videosignale im I- und Q-Kanal zugeführt. In einer Eingangsstufe 1 erfolgt zunächst die Analog-Digital-Wandlung der Videosignale. Die weiteren Stufen des Optimalempfängers bestehen aus einer Schaltung 2 zur Einzelpulsunterdrückung, einer Integrationsschaltung 3, einer Filtervergleichsschaltung 4 und einer Zielanzeige 5. Einzelimpulse, die von Zündanlagen oder fremden Radargeräten

0128543

herrühren oder auch Überreichweitenechos darstellen, können eine Zielentdeckung bei kohärenter Integration empfindlich erschweren. Es wird deshalb im Optimalempfänger zusätzlich eine Einzelpulsunterdrückung 2 zur Wiederherstellung des ungestörten Signalverlaufs verwendet, durch die die Entdeckung von Bewegtzielen in Störumgebung erheblich verbessert werden kann. Schaltungen zur Einzelpulsunterdrückung sind bekannt.

Mittels der Integrationsschaltung 3 soll eine modifizierte kohärente Integration der Echosignale durchgeführt werden, um den Filteraufwand, der in einem Pulsdopplerradargerät mit veränderbarer Pulsfolgefrequenz für eine kohärente Integration erforderlich wäre, erheblich reduzieren zu könenn. Die Voraussetzungen für die Durchführung einer modifizierten kohärenten Integration bestehen in der Durchführung einer bestimmten Staffelung der Pulsfolgefrequenz und in einer Phasenrückdrehung der Signalspannungen, die einen vorgegebenen konstanten Wert aufweist. Durch die modifizierte kohärente Integration wird eine nahezu optimale Zielentdeckung gewährleistet. Dabei werden die Echosignale eines Entfernungstores über mehrere Empfangsperioden vektoriell addiert. Unter Ausnutzung dieser Eigenschaft kann Überreichweitenclutter weitgehend unterdrückt werden, wenn die mittlere Leistung von Überreichweitenechos auf mehrere Entfernungstore verteilt wird. Die angestrebte Wirkung kann durch eine bestimmte Staffelung der Pulsfolgefrequenz erreicht werden. Werden dabei die unterschiedlichen Pulsfolgeperioden statistisch aneinandergereiht, so ist im Falle der Anwendung einer kohärenten Integration eine große Anzahl von kohärenten Filtern notwendig, um den ganzen interessierenden Dopplerfrequenzbereich abzudecken. Mit der modifizierten kohärenten Integration gemäß der Erfindung ist eine erhebliche Aufwandsreduzierung möglich, und es können mit einer geringen Anzahl von Filtern Überreichweitenechos

spektral von den Bewegtzielen der eindeutigen Reichweite unterschieden werden. Die Unterscheidung selbst erfolgt durch Filtervergleich in der Schaltungsstufe 4. Aufgrund ihres Rauschcharakters werden die Überreichweitenechos durch die geringe Bandbreite der kohärenten Filter leistungsmäßig geschwächt. Im Gegensatz zu den Bewegtzeichen der eindeutigen Reichweite werden die Überreichweitenechos in allen Filtern übertragen.

Zur Unterscheidung von Echosignalen aus der eindeutigen Reichweite von solchen Echosignalen, die aus Überreichweiten stammen, wird die Amplitude einer zu bewertenden Ausgangsspannung jeweils eines Filters mit dem Mittelwert aus den Amplituden aller Nachbarfilter verglichen. Eine Zielanzeige in der Anordnung 5 erfolgt nur dann, wenn das Ausgangssignal des Einzelfiltern eine Amplitude aufweist, die um einen vorgegebenen Faktor größer ist als der gemessene Mittelwert aller übrigen Filter.

Fig. 2 zeigt den schaltungsmäßigen Aufbau der Integrationsschaltung 3 nach Fig. 1. Die digitalen Signale werden eingangsseitig einer Hintereinanderschaltung von n Schieberegistern $SR_1$ - $SR_n$, deren Anzahl der Zahl der zu integrierenden Signalwerte entspricht, zugeführt. Die Ein- bzw. Ausgänge der Schieberegister erhalten je einen Abgriff, der an je einen Multiplizierer $M_1$ bis $M_{n+1}$ geführt ist. Der Ausgang jedes Multiplizierers ist mit einer gemeinsamen Addierschaltung AD verbunden. Jedes Schieberegister $SR_1$ bis $SR_n$ liefert eine Verzögerung, die der Pulsfolgeperiode des Radargerätes entspricht.

Um bei einer kohärenten Integration die vektorielle Addition der Abtastwerte vornehmen zu können, ist eine Phasenrückdrehung der einzelnen Abtastwerte erforderlich, die normalerweise aus der momentanen Pulswiederholzeit und der Filtermittenfrequenz abgeleitet werden muß. Bei der hier angewendeten modifizierten kohärenten Integration werden alle Abtastwerte an den Abgriffen zwischen den Schieberegistern im Multiplizierer einer Wichtung unterzogen, indem die einzelnen Abtastwerte mit $e^{-j\omega_c \cdot n \cdot \overline{PRT}}$ multipliziert werden. Dieser Vorgang bewirkt eine konstante Phasenrückdrehung, so daß nach jeweils zwei Phasenrückdrehschritten die erforderliche Phasenbedingung für die vektorielle Addition der Abtastwerte wiederhergestellt ist. Im Wichtungsfaktor bedeuten fO die Filtermittenfrequenz, n die Anzahl der Abtastwerte und $\overline{PRT}$ die mittlere Periodendauer der Pulsfolgefrequenz.

Die Unterscheidung von Überreichweitenechos von Bewegtzielen der eindeutigen Reichweite durch Filtervergleich wird anhand der Fig. 3 näher erläutert. Die Signalwerte an den Ausgängen $F_1$ bis $F_n$ sämtlicher Filter werden einer mittelwertbildenden Schaltung MS zugeführt, deren Ausgangssignal GMW zur weiteren Auswertung einem Subtrahierer SS zugeführt wird. Mittels eines Wählschalter WS werden nacheinander alle Filterausgänge $F_1$ bis $F_n$ auf Vorliegen eines Überreichweitenechos abgefragt. Das in Abhängigkeit von der Schalterstellung jeweils abgenommene Signal z.B. am Filterausgang $F_n$ wird dem Subtrahierer SS zur Differenzbildung zugeführt. Der Mittelwert GMW der Ausgangssignale aller Filter wird durch Subtraktion des Signalwertes des jeweils abzufragenden Filters z.B. $F_n$ in einen Mittelwert der Ausgangssignale aller benachbarten Filter von $F_n$ z.B. $F_1$ bis $F_{n-1}$ geändert. Dieser neue Mittelwert B wird in einem Komparator KS mit dem gegebenenfalls vorher im Multiplizierer WM gewichteten Filterausgangssignal A amplitudenmäßig verglichen. Ergibt der Vergleich ein Ergebnis z.B. A > B, dann erfolgt in einer nicht dargestellten Anordnung eine Zielanzeige.

Um in der Integrationsschaltung auch bei quasi-statistischer Pulsfolgefrequenz eine Kammfilterstruktur zu erhalten, ist die Staffelung der Pulswiederholzeiten so zu wählen, daß jeweils die Summe zweier aufeinanderfolgender Impulswiederholzeiten einen für alle Paare aufeinanderfolgender Pulse gleichbleibenden Wert ergibt. Die Kammstruktur wird umso regelmäßiger, je geordneter die Staffelung erfolgt. Eine ausgeprägte Kammstruktur entsteht, wenn auf den ersten innerhalb eines Integrationsintervalls ausgesendeten Puls nach $(\overline{PRT} + (-1)^n \cdot \Delta t)$ der n-te Sendeimpuls folgt. Darin bedeutet $\overline{PRT}$ eine konstante Periodendauer und t ein konstanter Bruchteil dieser Periodendauer.

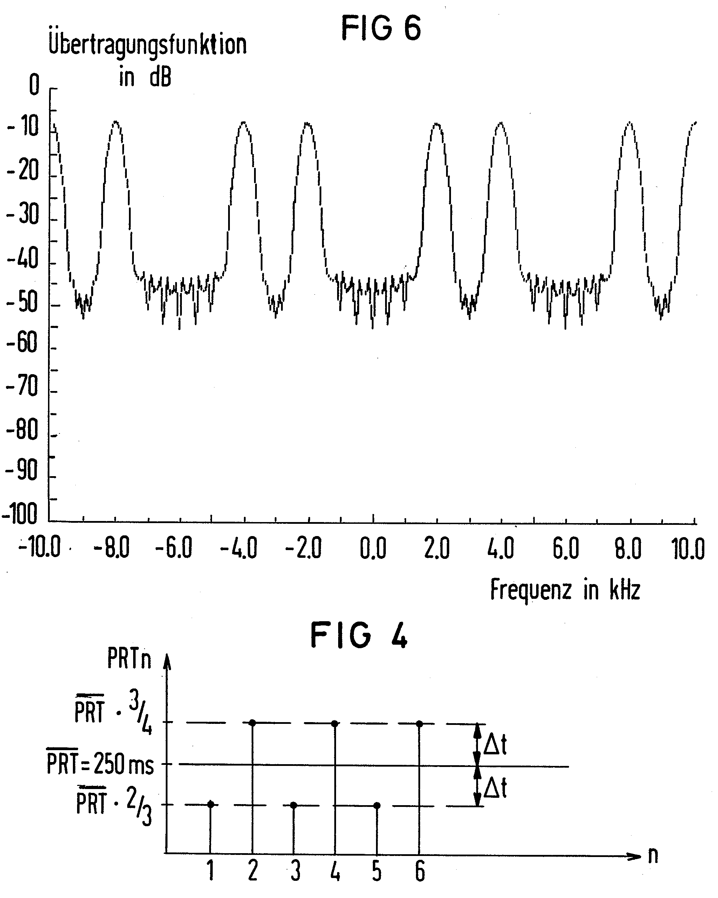

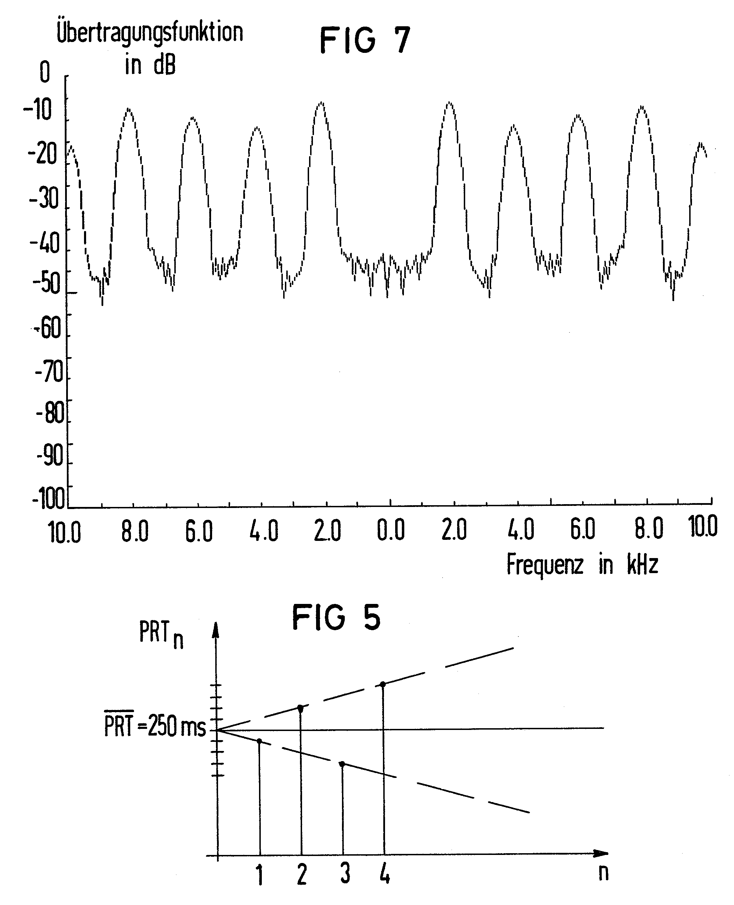

In den Fig. 4 und 5 sind zwei Beispiele für eine mögliche Staffelung der Pulsfolgefrequenz wiedergegeben. Beiden Beispielen ist eine mittlere Pulsfolgefrequenz $\overline{PRF}$ = 4 kHz mit einer entsprechenden Pulsfolgezeit $\overline{PRT}$ = 250 μs zugrundegelegt. Wie aus der Darstellung nach Fig. 4 ersichtlich, wechselt die Periode aufeinanderfolgender n Abfrageimpulse zwischen den beiden Werten $2/3 \cdot \overline{PRT}$ und $4/3 \cdot \overline{PRT}$. Aus der Darstellung ist ersichtlich, daß der Mittelwert von jeweils zwei aufeinanderfolgenden Pulsfolgeperioden einen konstanten Wert, nämlich 250 μs annimmt. Eine derartige Pulsfolgefrequenz-Staffelung erfolgt nach der Formel

$$PRT_n = (\overline{PRT} + (-1)^n \cdot \Delta T).$$

Im vorliegenden Beispiel ist T = 1/3 $\overline{PRT}$ gesetzt.

In Fig. 6 ist eine der beschriebenen Pulsfolgefrequenzstaffelung entsprechende Übertragungsfunktion einer modifizierten kohärenten Integration von 16 Impulsen über der Frequenz dargestellt. Die Phasenrückdrehung der Signalwerte erfolgt hierbei mit einem konstanten Wert $\Delta \varphi = 2 \pi \cdot f_0 \cdot \overline{PRT}$. Darin bedeutet $f_0$ = 2 kHz die Filtermittenfrequenz. Die aufgrund der konstanten Phasenrückdrehung erhaltene modifizierte kohärente Integration läßt in ihrer Übertragungsfunktion noch deutlich die Kammstruktur erkennen. Ein weiteres wichtiges Merkmal dieser Übertragungsfunktion ist, daß der Frequenzbereich um die Dopplerfrequenz 0 im Sperrbereich liegt, wodurch auch die Festzeichenunterdrückung gewährleistet ist.

Das zweite Beispiel für eine Staffelung der Pulsfolgefrequenz geht nach Fig. 5 von der gleichen mittleren Pulsfolgeperiode $\overline{PRT}$ = 250 µs aus. Die hier dargestellte Staffelung der Pulsfolgeperiode wird nach der Formel

$$PRT_n = (\overline{PRT} + n \cdot (-1)^n \cdot \Delta T)$$

gebildet. Die Anzahl der Pulsfolgefrequenzen ist hier nicht wie im Ausführungsbeispiel nach Fig. 4 auf zwei verschiedene Frequenzen beschränkt, sondern kann theoretisch einen beliebig großen Wert annehmen. Das wesentliche Merkmal auch der hier angegebenen Staffelung besteht darin, daß jeweils zwei aufeinanderfolgende Pulsfolgeperioden einen konstanten mittleren Wert annehmen.

In Fig. 7 ist die Übertragungsfunktion einer modifizierten kohärenten Integration von 16 Pulsen dargestellt, die nach dem in Fig. 5 dargestellten Beispiel gestaffelt sind. Für T wird hier der Wert $1/3 \cdot 1/16 \cdot \overline{PRT}$ eingesetzt. Die für die modifizierte kohärente Integration wesentliche konstante Phasenrückdrehung beträgt hier wieder $\Delta \varphi = 2 \pi \cdot f_0 \cdot \overline{PRT}$, wobei $f_0$ = 2 kHz gesetzt ist. Wie in Fig. 6 zeigt auch diese Übertragungsfunktion deutlich eine Kammstruktur und eine Nullstelle im Bereich der Dopplerfrequenz 0 Hz.

3 Patentansprüche
7 Figuren

Patentansprüche

1. Puls-Doppler-Radargerät mit veränderbarer Pulsfolgefrequenz und mit je einer Anordnung zur Unterdrückung von
Festzeichen und zur Integration der Echosignale, d a -
d u r c h   g e k e n n z e i c h n e t , daß die Echosignale einer durch vereinfachte vektorielle Addition der
Doppler-Signalimpulse modifizierten kohärenten Integration in einer Integrationsschaltung (3) mit mehreren Filtern unterzogen werden und daß die am Ausgang jedes Filters erhaltene Signalamplitude einzeln mit dem Mittelwert
der Videosignale aller Nachbarfilter verglichen und bei
Überschreiten des Mittelwertes zu einer Zielanzeige genutzt wird.

2. Puls-Doppler-Radargerät nach Anspruch 1, d a d u r c h
g e k e n n z e i c h n e t ,   daß eine solche Staffelung der Pulsfolgefrequenzen erfolgt, daß die Summe der
Frequenzen aufeinanderfolgender Pulsfolgefrequenzpaare
einen konstanten Wert aufweist und daß eine konstante
Phasenrückdrehung der Echosignale erfolgt, derart, daß
nach jeder zweiten Pulsfolgefrequenz die Phasenabweichung
gleich Null ist.

3. Puls-Doppler-Radargerät nach Anspruch 1 oder 2, d a -
d u r c h   g e k e n n z e i c h n e t , daß vor der
modifizierten kohärenten Integrationsschaltung (3) eine
Einzelpulsunterdrückungschaltung (2) angeordnet ist.

## FIG 1

## FIG 2

## FIG 3

FIG 6

Übertragungsfunktion
in dB

Frequenz in kHz

FIG 4

FIG 7

Übertragungsfunktion in dB

FIG 5

Europäisches
Patentamt

**EUROPÄISCHER RECHERCHENBERICHT**

0128543

Nummer der Anmeldung

EP 84 10 6530

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | NACHRICHTENTECHNISCHE ZEITSCHRIFT, Band 29, Nr. 9, September 1976, Seiten 663-666, Berlin, DE; P. KOLACNY: "Verluste und Verbesserungsfaktor bei blindgeschwindigkeitsfreier Ortung von Radarzielen im stationären farbigen Rauschen" * Abbildungen 1-3; Seite 663, linke Spalte, Zeile 1 - Seite 665, linke Spalte, Zeile 15 * | 1-2 | G 01 S 13/52<br>G 01 S 13/54<br>G 01 S 13/22 |
| Y | US-A-3 906 498 (J.W. TAYLOR, JR.) * Abbildungen 1,4; Spalte 1, Zeile 59 - Spalte 2, Zeile 34; Spalte 5, Zeile 40 - Spalte 7, Zeile 8 * | 1-2 | |
| | | | RECHERCHIERTE SACHGEBIETE (Int. Cl. 3) |
| Y | FR-A-2 125 166 (THOMSON-CSF) * Abbildung 5; Seite 1, Zeilen 1-5; Seite 6, Zeile 13 - Seite 7, Zeile 35 * | 1-2 | G 01 S |
| A | THE MARCONI REVIEW, Band XXXVI, nr. 191, 4. Quartal 1973, Seiten 237-248, GRT Baddow, GB; J.G. ELLIS: "Digital MTI, a new tool for the radar user" * Abbildung 9; Seite 242, Zeile 14 - Seite 246, Zeile 25 * | 3 | |

-/-

Der vorliegende Recherchenbericht wurde für alle Patentansprüche erstellt.

| Recherchenort | Abschlußdatum der Recherche | Prüfer |
|---|---|---|
| DEN HAAG | 18-09-1984 | CANNARD J.M. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

Europäisches Patentamt

| EINSCHLÄGIGE DOKUMENTE | | | Seite 2 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| A | EP-A-0 045 508 (SIEMENS)<br>* Insgesamt *<br><br>--- | 1 | |
| A | DE-A-2 500 877<br>(TELEFONAKTIEBOLAGET)<br><br>----- | | |
| | | | **RECHERCHIERTE SACHGEBIETE (Int. Cl. ³)** |

Der vorliegende Recherchenbericht wurde für alle Patentansprüche erstellt.

| Recherchenort | Abschlußdatum der Recherche | Prüfer |
|---|---|---|
| DEN HAAG | 18-09-1984 | CANNARD J.M. |